# EUROPEAN PATENT APPLICATION

(11) **EP 1 832 798 A1**
(43) Date of publication of application: **12.09.2007**
(21) Application number: 05819636.1
(22) Date of filing: 22.12.2005
(51) Int. Cl.: F16L 55/00, B63B 25/08, B67D 5/68, G01M 19/00

(54) **MANAGEMENT SYSTEM FOR MARINE HOSE**

(30) Priority: 28.12.2004 JP 2004380012; 28.12.2004 JP 2004380402; 17.11.2005 JP 2005332297; 17.11.2005 JP 2005332400
(71) Applicant: Bridgestone Corporation, Tokyo 104-8340 (JP)
(72) Inventor: KUMAGAI, Yuji c/o BRIDGESTONE CORPORATION, Yokohama-shi, Kanagawa 2448510 (JP); KOBAYASHI, Tomohiro c/o BRIDGESTONE CORPORATION, Yokohama-shi, Kanagawa 2448510 (JP); AKIYAMA, Hitoshi c/o BRIDGESTONE CORPORATION, Yokohama-shi, Kanagawa 2448510 (JP)
(74) Representative: Whalley, Kevin
(86) International application number: PCT/JP2005/023662
(87) International publication number: WO 2006/070700

(57) **Abstract**

A flange for coupling the marine hoses with each other is provided on an outer surface of its cylindrical portion with a liquid leakage sensor and a strain gauge. Information from the liquid leakage sensor and the strain gauge are transmitted through a signal line to an information accumulation device on a single-point mooring buoy. A computer is connected to the single-point mooring buoy, and the information transmitted from the liquid leakage sensor and the strain gauge is taken into the computer to detect a marine hose having a liquid leakage and a marine hose having an experienced abnormal external force. Further, the information transmitted from the strain gauge is taken into the computer, and a fatigue degree of each marine hose is estimated based on the number of times in which stress exceeding a specific minimum setting value has been generated in the marine hose and on the magnitude of each stress. Such information is displayed on a computer display image and the replacing time of a marine hose is estimated based on the information.

## Description

### TECHNICAL FIELD

The present invention relates to a management system for a marine hose capable of replacing a marine hose before the damage of such a marine hose.

### RELATED ART

Marine hoses for transporting crude oil may be sometimes damaged by collision with a harbor workboat or the like, fatigue deterioration and so on, so that there have been known marine hoses capable of detecting the damage due to the collision, deterioration and the like. That is, if large external force is applied to the hose due to the collision of the harbor workboat to the hose, bad weather or the like, an outer surface rubber of the hose is damaged and surrounding seawater may penetrate into the hose, or if an inner surface rubber for a reinforcing member in the hose is damaged due to fatigue deterioration to leak out a transported fluid such as crude oil or the like, the leaked liquid sinks into a reinforcing fiber layer of the hose to lower a proof pressure, which eventually results in the breakage of the hose. Therefore, in order to detect the damage of the hose, there are some hoses capable of detecting stress and liquid leakage in the hose.

As the marine hose capable of detecting stress in the hose, for example, there is a marine hose described in JP-A-H11-153284, in which a stress detecting sensor is disposed in the inside of the hose to detect the stress generated in the hose by the external force applied to the hose and output an electric signal corresponding to the stress value, and the detected stress is stored in an information storing means of a transponder and the stored stress value is read out by a readout means incorporating a transceiving antenna.

On the other hand, as a marine hose capable of detecting liquid leakage in the hose, there is a marine hose described, for example, in JP-A-H11-325378, in which a swelling rubber expanding by liquid is used as a liquid leakage sensor, and if the hose is damaged to penetrate liquid into the inside of the hose, the swelling rubber in the hose is expanded to actuate a contact switch and information of the liquid leakage is read out by a readout means incorporating a transceiving antenna to detect the damage.

In the marine hoses described in JP-A-H11-153284 and JP-A-H11-325378, however, there is a problem that a worker for the maintenance of the marine hose has to detect the damaged marine hoses by approximating the readout means incorporating a transceiving antenna to each marine hose and reading out information about stress value and liquid leakage stored in the information storing means from a number of marine hoses, which requires significant time and labor for the worker.

In the marine hose for transmitting crude oil is known a marine hose capable of estimating a fatigue degree of the hose. This marine hose can estimate the fatigue degree of the hose for replacing the hose before the breakage because when the outer surface rubber of the hose is damaged to penetrate the surrounding seawater into the hose, or when the inner surface rubber of the hose is damaged to leak out the transported fluid such as crude oil, the leaked liquid sinks into a reinforcing fiber layer of the hose to lower a proof pressure, which eventually results in the breakage of the hose.

For example, the marine hose described in JP-A-H11-153284 is provided with a stress detecting sensor detecting a stress generated in the hose by an external force applied to the hose and outputting an electric signal corresponding to the stress value and estimates the fatigue degree of the hose from the number and magnitude of the stress generated in the hose by storing the detected stress in a information storing means of a transponder and reading out the stored stress value by a readout means incorporating a transceiving antenna.

However, in the marine hose described in JP-A-H11-153284, the worker itself reads out the information about stress value from each marine hose by using the readout means incorporating a transceiving antenna and estimates the fatigue degree of each hose based on the number and magnitude of the stress generated in the hose, so that there is a problem that it is difficult to estimate the replacing time of in-use hoses rapidly and accurately.

### DISCLOSURE OF THE INVENTION

It is an object of the present invention to provide a management system for a marine hose, in which the maintenance worker can read out information about stress value and liquid leakage from marine hoses at small time and labor to detect a damaged marine hose.

It is another object of the present invention to provide a management system for a marine hose capable of estimating the replacing time of the marine hose rapidly and accurately.

The first embodiment of the present invention is a management system for a marine hose used for transporting crude oil or refined oil from a tanker moored in offshore mooring facilities, characterized in that at least one marine hose among a plurality of marine hoses coupled between the mooring facilities and the tanker comprises a sensor for detecting damage of the marine hose, and the mooring facility comprises an information accumulation device for accumulating and storing information transmitted from the sensor through signal lines provided in the marine hose and an external connection for taking out the information accumulated and stored in the information accumulation device, and an information acquiring means is connected to the external connection to display the information from the sensor on a display portion of the information acquiring means to thereby detect a damaged marine hose.

The second embodiment of the present invention is a management system for a marine hose used for transporting crude oil or refined oil from a tanker moored in offshore mooring facilities, characterized in that at least one marine hose disposed at a side of the mooring facility and/or at least one marine hose disposed at a side of the tanker out among a plurality of marine hoses coupled between the mooring facilities and the tanker comprise a sensor for detecting damage of the marine hose, and the mooring facility comprises an information accumulation device for accumulating and storing information transmitted from the sensor through signal lines provided in the marine hose and an external connection for taking out the information accumulated and stored in the information accumulation device, and an information acquiring means is connected to the external connection to display the information from the sensor on a display portion of the information acquiring means to thereby detect a damaged marine hose.

The third embodiment of the present invention is a management system for a marine hose used for transporting crude oil or refined oil from a tanker moored in offshore mooring facilities, characterized in that at least one marine hose among a plurality of marine hoses coupled between the mooring facilities and the tanker comprises a sensor for detecting damage of the marine hose, and the mooring facility comprises an information accumulation device for accumulating and storing information transmitted from the sensor through signal lines provided in the marine hose and a transceiver for taking out the information accumulated and stored in the information accumulation device, and the information from the sensor is displayed on a display portion of an information acquiring means acquiring the information stored in the information accumulation device through the transceiver to detect a damaged marine hose.

The forth embodiment of the present invention is a management system for a marine hose used for transporting crude oil or refined oil from a tanker moored in offshore mooring facilities, characterized in that at least one marine hose disposed at a side of the mooring facility and/or at least one marine hose disposed at a side of the tanker among a plurality of marine hoses coupled between the mooring facilities and the tanker comprise a sensor for detecting damage of the marine hose, and the mooring facility comprises an information accumulation device for accumulating and storing information transmitted from the sensor through signal lines provided in the marine hose and a transceiver for taking out the information accumulated and stored in the information accumulation device, and the information from the sensor is displayed on a display portion of an information acquiring means acquiring the information stored in the information accumulation device through the transceiver to detect a damaged marine hose.

In the first to forth embodiments of the present invention, it is preferable that the mooring facility comprises a power supply device and supplies power to the sensor through a power line provided in the marine hose, and that the sensor is a liquid leakage sensor and/or a strain gauge, and that the marine hose comprises at least four strain gauges.

The fifth embodiment of the present invention is a management system for a marine hose used for transporting crude oil or refined oil from a tanker moored in offshore mooring facilities, characterized in that at least one marine hose among a plurality of marine hoses coupled between the mooring facilities and the tanker comprises a strain gauge for detecting stress generated in the hose, and the mooring facility comprises an information accumulation device for accumulating and storing information transmitted from the gauge through signal lines provided in the marine hose and an external connection for taking out the information accumulated and stored in the information accumulation device, and a fatigue degree of each marine hose is estimated by an information acquiring means connected to the external connection based on number of times in which stress exceeding a certain minimum setting value has been generated in the marine hose and on each value of the stresses to estimate the replacing time of the marine hose.

The sixth embodiment of the present invention is a management system for a marine hose used for transporting crude oil or refined oil from a tanker moored in offshore mooring facilities, characterized in that at least one marine hose disposed at a side of the mooring facility and/or at least one marine hose disposed at a side of the tanker among a plurality of marine hoses coupled between the mooring facilities and the tanker comprise a strain gauge for detecting stress generated in the hose, and the mooring facility comprises an information accumulation device for accumulating and storing information transmitted from the strain gauge through signal lines provided in the marine hose and an external connection for taking out the information accumulated and stored in the information accumulation device, and a fatigue degree of each marine hose is estimated by an information acquiring means connected to the external connection based on number of times in which stress exceeding a certain minimum setting value has been generated in the marine hose and on each value of the stresses to estimate the replacing time of the marine hose.

The seventh embodiment of the present invention is a management system for a marine hose used for transporting crude oil or refined oil from a tanker moored in offshore mooring facilities, characterized in that at least one marine hose among a plurality of marine hoses coupled between the mooring facilities and the tanker comprises a strain gauge for detecting stress generated in the hose, and the mooring facility comprises an information accumulation device for accumulating and storing information transmitted from the strain gauge through signal lines provided in the marine hose and a transceiver for taking out the information accumulated and stored in the information accumulation device, and a fatigue degree of each marine hose is estimated by an information acquiring means acquiring the information stored in the information accumulation device through the transceiver based on number of times in which stress exceeding a certain minimum setting value has been generated in the marine hose and on each value of the stresses to estimate the replacing time of the marine hose.

The eighth embodiment of the present invention is a management system for a marine hose used for transporting crude oil or refined oil from a tanker moored in offshore mooring facilities, characterized in that at least one marine hose disposed at a side of the mooring facility and/or at least one marine hose disposed at a side of the tanker among a plurality of marine hoses coupled between the mooring facilities and the tanker comprise a strain gauge for detecting stress generated in the hose, and the mooring facility comprises an information accumulation device for accumulating and storing information transmitted from the strain gauge through signal lines provided in the marine hose and a transceiver for taking out the information accumulated and stored in the information accumulation device, and a fatigue degree of each marine hose is estimated by an information acquiring means acquiring the information stored in the information accumulation device through the transceiver based on number of times in which stress exceeding a certain minimum setting value has been generated in the marine hose and on each value of the stresses to estimate the replacing time of the marine hose.

In the fifth to eighth embodiments of the present invention, it is preferable that the mooring facility comprises a power supply device and supplies power to the strain gauge through a power line provided in the marine hose, and that the marine hose comprises at least four strain gauges, and that the marine hose further comprises a liquid leakage sensor in addition to the strain gauge, whereby a marine hose having experienced external force is detected by information from the strain gauge and a marine hose having experienced liquid leakage is detected by information from the liquid leakage sensor.

### BRIEF DESCRIPTION OF THE DRAWINGS

[FIG. 1] FIG. 1 is a side view of a marine hose.
[FIG. 2] FIG. 2 is a plan view of an example of a flange disposed at each end of the marine hose.
[FIG. 3] FIG. 3A is a side view of a flange. FIG. 3B is a front view of a flange wherein portions of a liquid leakage sensor, a strain gauge and an information processor are covered with a marine hose main body.
[FIG. 4] FIG. 4 is a view showing another example of a joint portion of a flange.
[FIG. 5] FIG. 5 is a view showing an example of a hose line.
[FIG. 6] FIG. 6 is an enlarged view of a part of the hose lines connected to a single-point mooring buoy.
[FIG. 7] FIG. 7 is a function block diagram of the single-point mooring buoy according to the first embodiment of the present invention.
[FIG. 8] FIG. 8 is a view showing an example of a computer display image illustrating a stress value obtained from a strain gauge provided in each marine hose.
[FIG. 9] FIG. 9 is a view showing an example of a computer display image illustrating results obtained by analyzing information from the marine hose.
[FIG. 10] FIG. 10 is a function block diagram of the single-point mooring buoy according to the second embodiment of the present invention.

### BEST MODE FOR CARRYING OUT THE INVENTION

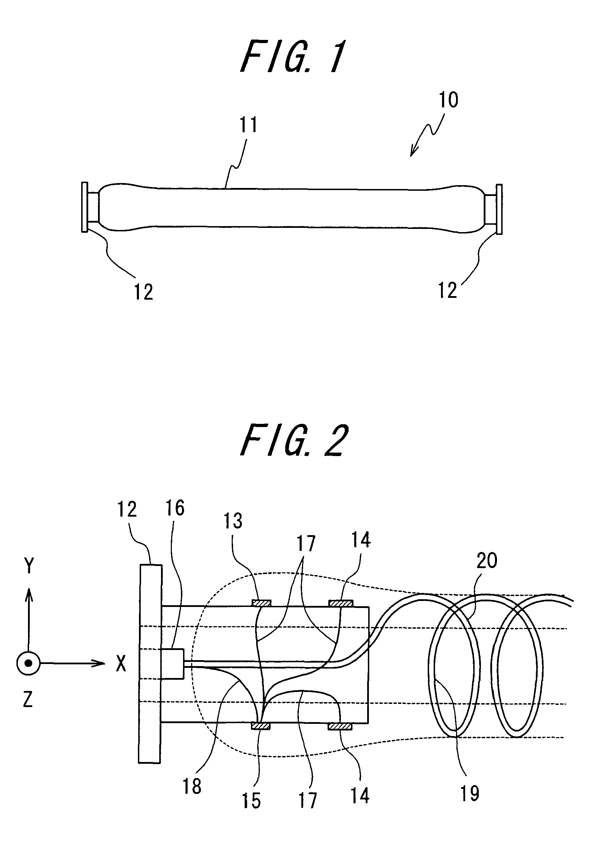

An embodiment of the present invention will be described with reference to the drawings below. FIG. 1 is a side view of a marine hose according to the first embodiment of the present invention. The marine hose 10 has a marine hose main body 11 and flanges 12 disposed at the both ends thereof. A hose line is formed by concentrically coupling a dozen to a few dozens of marine hoses 10 through the flanges 12, which is used for transportation of crude oil or refined oil. The marine hose 10 used herein is a floating type hose always used at a floating state.

FIG. 2 is a plan view of an example of a flange disposed at each end of the marine hose. The flange 12 is disposed for coupling the marine hoses with each other and provided on an outer surface of its cylindrical portion with a liquid leakage sensor 13 and a strain gauge 14 as a damage detecting sensor for detecting the damage of the marine hose and further provided with an information processor 15. In addition, a terminal connector 16 is provided at the joint portion of the flange 12.

As the liquid leakage sensor 13 is used, for example, a sensor in which a resistance value is changed in contact with liquid, or a sensor using a switch in which contacts are changed over with an expanding material expanding by absorbing liquid. At least four strain gauges 14 are preferably provided. In this figure, four strain gauges 14 are disposed on the cylindrical portion at every 90 degrees, whereby stress in the direction of line segments connecting the four strain gauges can be detected. By such an arrangement can be measured bending forces in Y and Z directions and tensile and compression forces in X direction. Moreover, if the strain gauge is disposed aslant, torsion around the X-axis can also be measured. The information processor 15 comprises a central processing unit (CPU), a clock unit and a memory unit, wherein the clock unit outputs time data and the memory unit stores information about the presence of liquid leakage from the liquid leakage sensor 13 and information about stress value from the strain gauge 14 with time data. In addition, the memory unit stores identification information inherent to each marine hose 10.

The liquid leakage sensor 13 and the strain gauge 14 are connected to the information processor 15 through information signal lines 17, respectively. Also, the information processor 15 is connected to the terminal connector 16 through a signal line 18, while the signal line 18 is connected to a signal line 19 at the terminal connector 16. The information processor 15 and the terminal connector 16 may be integrated.

The signal line 19 is provided in order that an information accumulation device in mooring facilities mentioned below transmits and receives a signal to and from each information processor 15 in a plurality of marine hoses coupled to one another. One end portion of the signal line 19 is connected to the terminal connector 16, while the other end portion is connected to a terminal connector of a flange disposed at the other end of the marine hose 10. The signal lines 19 are connected in series by coupling the adjacent marine hoses with each other. This signal line 19 is spirally or zigzag wound and embedded in the hose so as to withstand the bending of the hose.

The terminal connector in the marine hose located farthest from the mooring facility may be left open as long as there is no impact on the gathering of information from the marine hose, but if there is any impact, a terminal device is attached to the terminal connector.

Further, the terminal connector 16 is connected to a power line 20. The power line 20 is provided in order that a power supply device of the mooring facility mentioned below supplies power to the liquid leakage sensor 13, the strain gauge 14 and the information processor 15 of each marine hose. One end portion of the power line 20 is connected to the terminal connector 16, while the other end portion is connected to the terminal connector of the flange disposed at the other end of the marine hose 10. The liquid leakage sensor 13, the strain gauge 14 and the information processor 15 are supplied with power from the power line 20 through power lines not shown. This power line 20 is spirally or zigzag wound and embedded in the hose so as to withstand the bending of the hose likewise the signal line 19. Furthermore, a compact power supply device (for example, a battery) may be incorporated into the terminal connector 16 for supplying power to the liquid leakage sensor 13, the strain gauge 14 and the information processor 15 through the power lines.

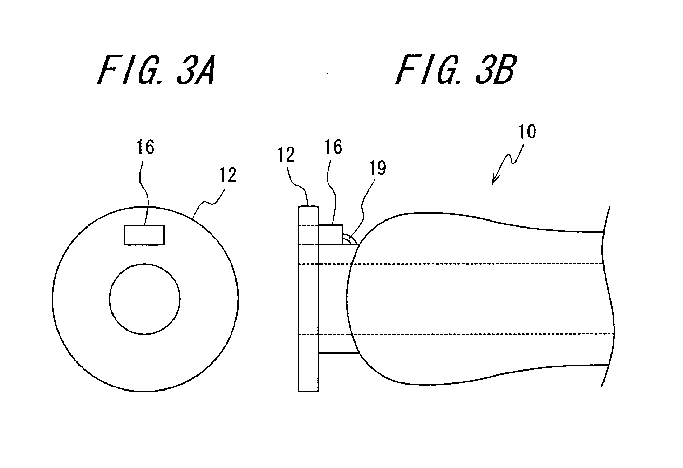

An outer surface part of the cylindrical portion of the flange provided with the liquid leakage sensor 13, the strain gauge 14 and the information processor 15 is covered with the marine hose main body 11 consisting of an inner surface rubber, a reinforcing fiber layer and an outer surface rubber. FIG. 3A is a side view of the flange and FIG. 3B is a front view of a flange portion in the marine hose at a state of covering the liquid leakage sensor 13, the strain gauge 14 and the information processor 15 with the marine hose main body. The signal line 19 and the power line 20 are embedded in an outer skin layer or a buoyancy layer.

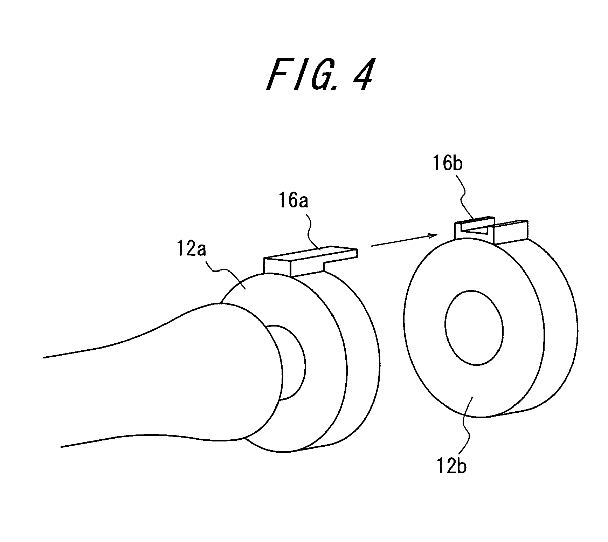

The flange 12 of the marine hose 10 and the flange of the adjacent marine hose to be coupled are fixed to each other by means of bolts and nuts at a state that the signal lines 19 and the power lines 20 are electrically connected to each other with the terminal connectors 16, respectively. FIG. 4 shows another example of a joint portion of a flange. In FIGS. 3A and 3B, the terminal connector is provided on the joint face of the flange, while in FIG. 4, the terminal connector is provided on the outer peripheral surface of the joint portion of the flange. One flange 12a of the marine hose is provided with a terminal connector 16a having a convex portion, while the other flange 12b is provided with a terminal connector 16b having a concave portion, wherein the terminal connectors 16a and 16b are fitted to each other. Thus, when the terminal connector is provided on the outer peripheral surface of the joint portion of the flange, it can be used for positioning the marine hoses in coupling.

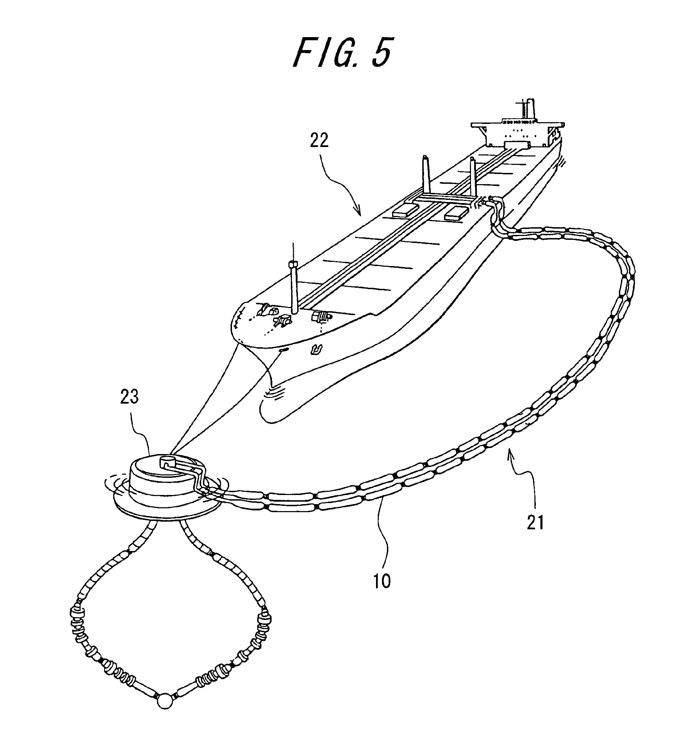

In FIG. 5 is shown an example of a hose line formed by coupling a plurality of marine hoses 10. This hose line 21 is disposed between a ship 22 such as a tanker and a seaborne single-point mooring buoy 23 and has a structure of coupling a plurality of seaborne marine hoses 10.

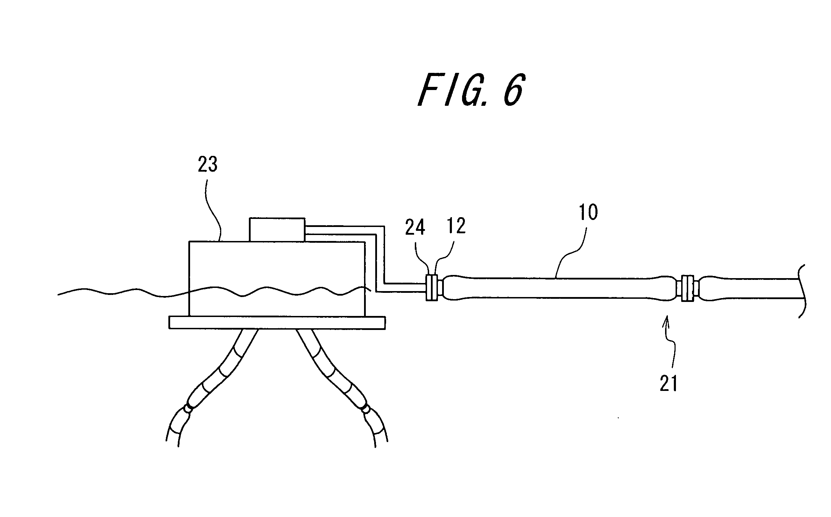

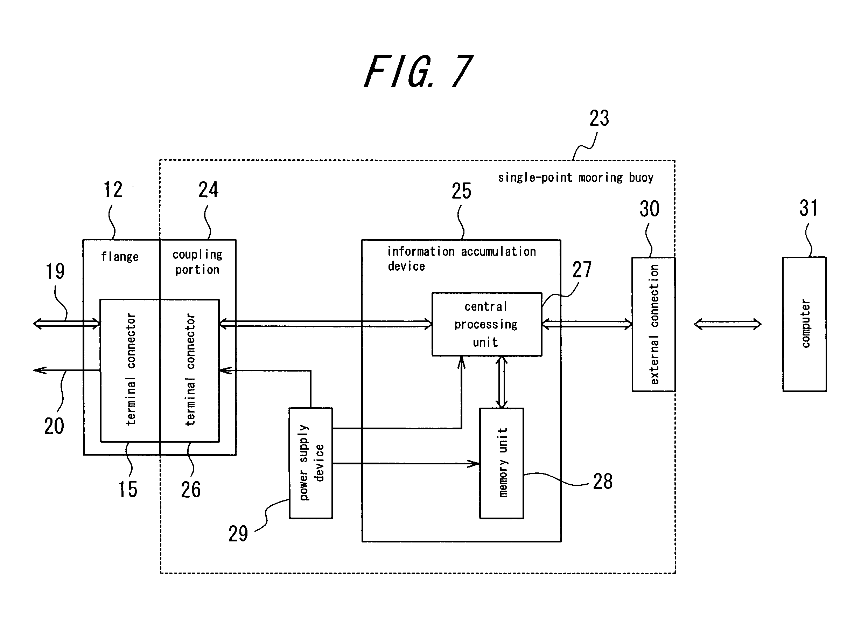

FIG. 6 is an enlarged view of a part of the hose line 21 connected to a single-point mooring buoy 23 as a mooring facility, and FIG. 7 is a function block diagram of the single-point mooring buoy. The single-point mooring buoy 23 has a coupling portion 24 for coupling the flange 12 of the marine hose 10 located at one end of the hose line 21. Also, the single-point mooring buoy 23 is provided in its inside with an information accumulation device 25 for accumulating information transmitted from the liquid leakage sensor 13 and the strain gauge 14 of each marine hose 10 through a terminal connector 26 of the coupling portion 24 connected to the signal line 19 from each marine hose 10 and a power supply device 29 for operating the information accumulation device 25 and further supplying power to the liquid leakage sensor 13, the strain gauge 14 and the information processor 15 of each marine hose through the power line 20. Furthermore, the single-point mooring buoy 23 is provided on an upper face thereof with an external connection 30 for connecting to a portable computer 31 and taking out information of the liquid leakage sensor 13 and the strain gauge accumulated in the information accumulation device 25. The external connection 30 is covered with a lid so as not to penetrate seawater into the inside when the computer 31 is not connected.

The information accumulation device 25 comprises a central processing unit (CPU) 27 for transmitting instruction for reading out information of the liquid leakage sensor 13 and the strain gauge 14 to the information processor 15 of each marine hose 10 through the terminal connector 26 of the coupling portion 24 to accumulate information from the information processor 15, and a memory unit 28 for storing information (information about stress, liquid leakage and the like) transmitted from each marine hose.

As the power supply device 29 may be used a solar battery or a battery. When the solar battery is used in the power supply device 29, it is always charged by sunlight, so that power can be continuously supplied to the liquid leakage sensor 13 and the strain gauge 14 of each marine hose and also the presence of liquid leakage and stress generated in the hose can be continuously detected in each marine hose.

In the above-mentioned embodiment, the power supply device for supplying power to the strain gauge and the liquid leakage sensor of each marine hose is disposed in the single-point mooring buoy as the mooring facility, so that larger power can be constantly supplied to the strain gauge and the liquid leakage sensor as compared with the case that each marine hose is provided with the power supply device, and hence information of the marine hose can be constantly obtained. In addition, since the power supply device is disposed only in the mooring facility, the maintenance of the power supply device becomes easy as compared with the case that each marine hose has the power supply device.

Next, the operation of the management system for the marine hose of the present invention will be described with reference to FIGS. 2 and 7. The liquid leakage sensor 13 in each marine hose 10 is constantly detecting the presence of liquid leakage and the strain gauge 14 is constantly detecting the stress of the marine hose 10. The central processing unit of the information processor 15 stores information about the presence of liquid leakage with time data of the clock unit in the memory unit when the liquid leakage sensor 13 detects liquid leakage. The central processing unit also stores information about stress value with time data of the clock unit in the memory unit when the strain gauge 14 detects stress exceeding the minimum setting value.

The central processing unit 27 of the information accumulation device 25 calls and runs the program stored in the memory unit 28 and outputs specific identification information and information readout instruction to the information processor 15 of each marine hose 10 in turn through the signal lines 18 and 19 at a constant cycle.

The information processor 15 of each marine hose 10 receives the specific identification information and the information readout instruction through the signal lines 18 and 19, and then compares the received specific identification information with identification information inherent to the marine hose stored in the memory unit of the information processor 15. The information processor 15 of the marine hose 10 having the coincident identification information reads out the information about the presence of liquid leakage and stress with time data from the memory unit and then outputs the information with the specific identification information through the signal lines 18 and 19 to the information accumulation device 25 of the single-point mooring buoy 23.

As the central processing unit 27 of the information accumulation device 25 receives the information about the presence of liquid leakage, the stress and the time data from each marine hose 10, it stores the information for each marine hose 10 in the memory unit 28.

In this way, the central processing unit 27 stores the information from the liquid leakage sensor 13 and the strain gauge 14 every the marine hose 10 in the memory unit 28 over a given period of the past.

A worker for the maintenance of the marine hose goes to the buoy 23 by ship, connects a portable computer 31 as an information acquiring means to the external connection 30 of the buoy 23 and takes the information in the computer 31. The computer 31 displays the information on a computer display image. From this display image can be detected a marine hose having a liquid leakage or a marine hose having an experienced abnormal external force, whereby the marine hose can be replaced with a new hose in appropriate time before the marine hose is destroyed.

In addition, the computer 31 analyzes the information, and estimates a fatigue degree of each marine hose based on the number of times in which stress exceeding a specific threshold has been generated in the marine hose and on the magnitude of each stress with a curve of repetitive stress-repetitive number (S-N curve) indicating a relation between stress value generated in the marine hose and number of repetitions until breakage, and displays this information on the computer display image.

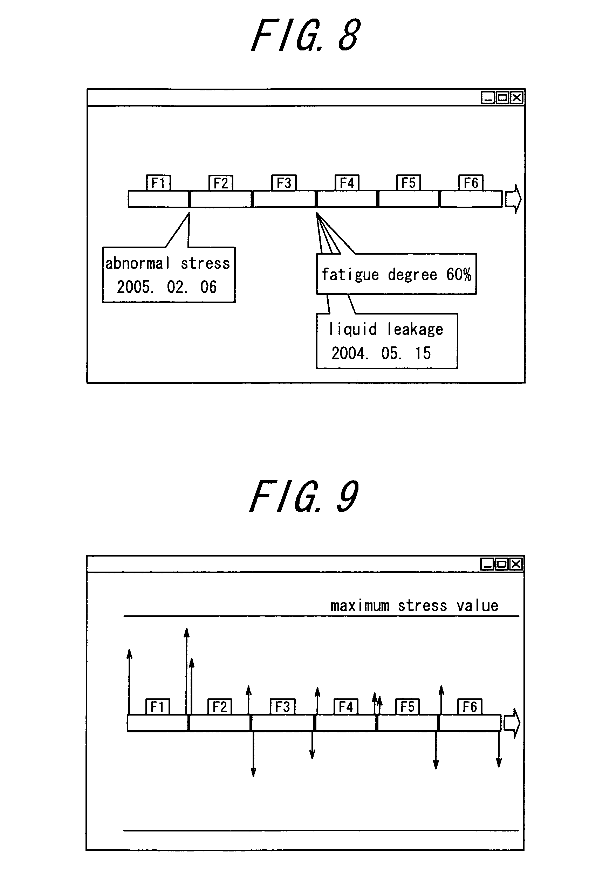

FIG. 8 is an example of a computer display image showing stress value obtained from each strain gauge provided in the marine hoses. From this display image, the worker can visually understand how much external force is applied to which marine hose. In the figure, F1 to F6 indicate marine hoses.

FIG. 9 is an example of a computer display image showing results of the information from the marine hoses analyzed by the computer in real time. Based on the information of the display image, it is possible to send instruction to the worker so as not to add large external force to the marine hose when he operates the marine hose. Therefore, attachment and detachment of the marine hose can be performed safely.

In the present invention according to the above-mentioned first embodiment, the worker does not have to approach each marine hose for reading out the information from the liquid leakage sensor and the strain gauge of each marine hose, but reads out information of the marine hoses from the single-point mooring buoy at once and detects a marine hose having a liquid leakage and a marine hose having an experienced abnormal external force, so that the working hours of the worker and his effort can be reduced.

Further, in the present invention according to the first embodiment, the fatigue degree of each marine hose is estimated by means of the computer processing, so that the replacing time of the marine hose can be estimated rapidly and accurately.

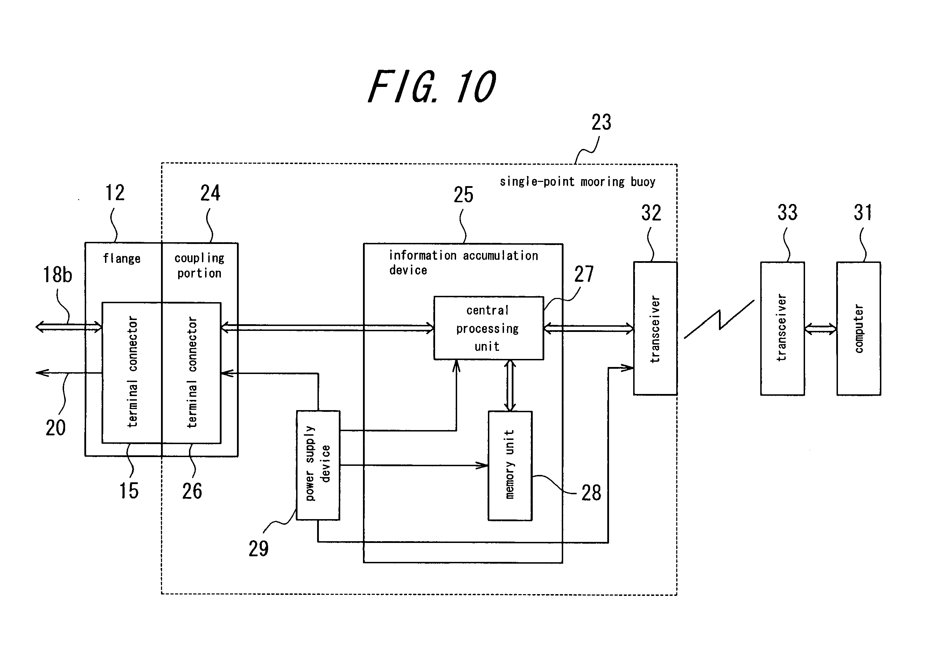

Next, the second embodiment of the present invention will be described. FIG. 10 is a function block diagram of a single-point mooring buoy according to the second embodiment of the present invention. In the second embodiment, a transceiver 32 is disposed instead of the external connection provided in the single-point mooring buoy according to the first embodiment,. The transceiver 32 outputs information from the liquid leakage sensor 13 and the strain gauge 14, which is output by the central processing unit 27, through a land-based transceiver 33 to a computer 31 as an external information acquiring means by wireless. The transceiver 32 is supplied with power by the power supply device 29. As the transceivers 32 and 33, it is possible to use a cellular phone. In FIG. 10, elements similar to those of the single-point mooring buoy according to the first embodiment shown in FIG. 7 are denoted by the same reference numerals and their explanation will be omitted.

Next, the operation of the management system for the marine hose of the second embodiment will be described with reference to FIGS. 2 and 10. The liquid leakage sensor 13 in each marine hose 10 is constantly detecting the presence of liquid leakage and the strain gauge 14 is constantly detecting the stress of the marine hose 10. The central processing unit of the information processor 15 stores information about the presence of liquid leakage with time data of the clock unit in the memory unit when the liquid leakage sensor 13 detects liquid leakage, while it stores information about stress value with time data of the clock unit in the memory unit when the strain gauge 14 detects stress exceeding the threshold value.

The central processing unit 27 of the information accumulation device 25 calls and runs the program stored in the memory unit 28 and outputs specific identification information and information readout instruction to the information processor 15 of each marine hose 10 in turn through the signal lines 18 and 19 at a constant cycle.

The information processor 15 of each marine hose 10 receives the specific identification information and the information readout instruction through the signal lines 18 and 19, and then compares the received specific identification information with identification information inherent to the marine hose stored in the memory unit of the information processor 15. The information processor 15 of the marine hose 10 having a coincident identification information reads out the information about the presence of liquid leakage and stress with time data from the memory unit and then outputs the information with the specific identification information through the signal lines 18 and 19 to the information accumulation device 25 of the buoy 23.

As the central processing unit 27 of the information accumulation device 25 receives the information about the presence of liquid leakage, the stress and the time data from the signal lines 18 and 19, it stores the information in the memory unit 28 and immediately outputs the information to the computer 31 through the transceivers 32 and 33.

The computer 31 displays the information on a computer display image. From this display image can be detected a marine hose having a liquid leakage and a marine hose having an experienced abnormal external force, whereby the marine hose can be replaced with a new hose in appropriate time before the marine hose is destroyed.

Also, when the computer 31 receives the information about the presence of liquid leakage, the stress and the time data, the computer 31 stores the information every the marine hose 10 in the memory unit over a given period of the past.

In addition, the computer 31 analyzes the information, and estimates a fatigue degree of each marine hose based on the number of times in which stress exceeding a specific threshold has been generated in the marine hose and on the magnitude of each stress with a curve of repetitive stress-repetitive number (S-N curve) indicating a relation between stress value generated in the marine hose and number of repetitions until breakage, and displays this information on the computer display image.

In the present invention according to the above-mentioned second embodiment, by reading out the information of the marine hoses from the single-point mooring buoy at once can be reduced the working time of the worker and his effort, but also since the information is immediately transmitted from the single-point mooring buoy to the computer by wireless, a marine hose having a liquid leakage and a marine hose having an experienced abnormal external force can be detected in real time.

Furthermore, in the present invention according to the second embodiment, since the information of the marine hose is immediately transmitted from the single-point mooring buoy to the computer by wireless, the fatigue degree of each marine hose can be estimated in real time and hence the replacing time of the marine hose can be estimated in real time.

Although the above-mentioned embodiments are explained with respect to the case that all of the coupled marine hoses have damage detecting sensors such as liquid leakage sensors, strain gauges and the like, the present invention is not limited to the above case, but can be applied to a case that the damage detecting sensor is provided every two marine hoses or a case that the damage detecting sensor is provided every three marine hoses. In other words, the present invention can be applicable to the case that the damage detecting sensor is provided on at least one marine hose among a plurality of marine hoses.

When an external force is applied to a plurality of coupled marine hoses, a larger external force is generally applied to a marine hose in the vicinity of the single-point mooring buoy and a marine hose in the vicinity of the tanker, respectively, so that the damage detecting sensor may be disposed on at least one marine hose located at the side of the single-point mooring buoy and/or at least one marine hose located at the side of the tanker.

Although the above-mentioned embodiments are described with respect to marine hoses of a floating type always used at a floating state, the present invention is applicable to a hose of a submarine type used below the surface of the sea or a hose of a sink-float type, which is floating in used and sinking to the sea floor in non use.

Also, the present invention is applicable to a hose below a buoy used between a manifold at a top end side of a pipe line (PLEM: Pipe Line End Manifold) which is coupled to an onshore tank or the like and laid on or embedded in the sea floor and the single-point mooring buoy.

### INDUSTRIAL APPLICABILITY

In the present invention, the worker does not have to approach each marine hose for reading out the information from the liquid leakage sensor and the strain gauge of each marine hose, but reads out information of the marine hoses from the single-point mooring buoy at once and detects a marine hose having a liquid leakage and a marine hose having an experienced abnormal external force, so that the working hours of the worker and his effort can be reduced.

Also, in the present invention, the fatigue degree of each marine hose is estimated by means of the computer processing, so that the replacing time of the marine hose can be estimated rapidly and accurately.

Further, in the present invention, the information of the marine hose is immediately transmitted from the single-point mooring buoy to the computer by wireless, whereby a marine hose having an experienced abnormal external force and a marine hose having a liquid leakage can be detected in real time. In addition, since the information of the marine hose is immediately transmitted from the single-point mooring buoy to the computer by wireless, the fatigue degree of each marine hose can be estimated in real time and the replacing time of the marine hose can be estimated in real time.

Moreover, in the present invention, the power supply device for supplying power to the liquid leakage sensor and the strain gauge of each marine hose is disposed in the mooring facility, so that larger power can be constantly supplied to the strain gauge and the liquid leakage sensor as compared with the case that each marine hose is provided with the power supply device, and hence information of the marine hose can be constantly obtained. In addition, since the power supply device is disposed only in the mooring facility, the maintenance of the power supply device becomes easy as compared with the case that each marine hose has the power supply device.

## Claims

1. A management system for a marine hose used for transporting crude oil or refined oil from a tanker moored in offshore mooring facilities, **characterized in that**
at least one marine hose among a plurality of marine hoses coupled between the mooring facilities and the tanker comprises a sensor for detecting damage of the marine hose, and
the mooring facility comprises an information accumulation device for accumulating and storing information transmitted from the sensor through signal lines provided in the marine hose and an external connection for taking out the information accumulated and stored in the information accumulation device, and
an information acquiring means is connected to the external connection to display the information from the sensor on a display portion of the information acquiring means to thereby detect a damaged marine hose.

2. A management system for a marine hose used for transporting crude oil or refined oil from a tanker moored in offshore mooring facilities,
**characterized in that**
at least one marine hose disposed at a side of the mooring facility and/or at least one marine hose disposed at a side of the tanker out among a plurality of marine hoses coupled between the mooring facilities and the tanker comprise a sensor for detecting damage of the marine hose, and
the mooring facility comprises an information accumulation device for accumulating and storing information transmitted from the sensor through signal lines provided in the marine hose and an external connection for taking out the information accumulated and stored in the information accumulation device, and
an information acquiring means is connected to the external connection to display the information from the sensor on a display portion of the information acquiring means to thereby detect a damaged marine hose.

3. A management system for a marine hose used for transporting crude oil or refined oil from a tanker moored in offshore mooring facilities,
**characterized in that**
at least one marine hose among a plurality of marine hoses coupled between the mooring facilities and the tanker comprises a sensor for detecting damage of the marine hose, and
the mooring facility comprises an information accumulation device for accumulating and storing information transmitted from the sensor through signal lines provided in the marine hose and a transceiver for taking out the information accumulated and stored in the information accumulation device, and
the information from the sensor is displayed on a display portion of an information acquiring means acquiring the information stored in the information accumulation device through the transceiver to detect a damaged marine hose.

4. A management system for a marine hose used for transporting crude oil or refined oil from a tanker moored in offshore mooring facilities,
**characterized in that**
at least one marine hose disposed at a side of the mooring facility and/or at least one marine hose disposed at a side of the tanker among a plurality of marine hoses coupled between the mooring facilities and the tanker comprise a sensor for detecting damage of the marine hose, and
the mooring facility comprises an information accumulation device for accumulating and storing information transmitted from the sensor through signal lines provided in the marine hose and a transceiver for taking out the information accumulated and stored in the information accumulation device, and
the information from the sensor is displayed on a display portion of an information acquiring means acquiring the information stored in the information accumulation device through the transceiver to detect a damaged marine hose.

5. A management system for a marine hose according to any one of claims 1 to 4, wherein the mooring facility comprises a power supply device and supplies power to the sensor through a power line provided in the marine hose.

6. A management system for a marine hose according to any one of claims 1 to 4, wherein the sensor is a liquid leakage sensor and/or a strain gauge.

7. A management system for a marine hose according to any one of claims 1 to 4, wherein the marine hose comprises at least four strain gauges.

8. A management system for a marine hose used for transporting crude oil or refined oil from a tanker moored in offshore mooring facilities,
**characterized in that**
at least one marine hose among a plurality of marine hoses coupled between the mooring facilities and the tanker comprises a strain gauge for detecting stress generated in the hose, and
the mooring facility comprises an information accumulation device for accumulating and storing information transmitted from the gauge through signal lines provided in the marine hose and an external connection for taking out the information accumulated and stored in the information accumulation device, and
a fatigue degree of each marine hose is estimated by an information acquiring means connected to the external connection based on number of times in which stress exceeding a certain minimum setting value has been generated in the marine hose and on each value of the stresses to estimate the replacing time of the marine hose.

9. A management system for a marine hose used for transporting crude oil or refined oil from a tanker moored in offshore mooring facilities,
**characterized in that**
at least one marine hose disposed at a side of the mooring facility and/or at least one marine hose disposed at a side of the tanker among a plurality of marine hoses coupled between the mooring facilities and the tanker comprise a strain gauge for detecting stress generated in the hose, and
the mooring facility comprises an information accumulation device for accumulating and storing information transmitted from the strain gauge through signal lines provided in the marine hose and an external connection for taking out the information accumulated and stored in the information accumulation device, and
a fatigue degree of each marine hose is estimated by an information acquiring means connected to the external connection based on number of times in which stress exceeding a certain minimum setting value has been generated in the marine hose and on each value of the stresses to estimate the replacing time of the marine hose.

10. A management system for a marine hose used for transporting crude oil or refined oil from a tanker moored in offshore mooring facilities,
**characterized in that**
at least one marine hose among a plurality of marine hoses coupled between the mooring facilities and the tanker comprises a strain gauge for detecting stress generated in the hose, and
the mooring facility comprises an information accumulation device for accumulating and storing information transmitted from the strain gauge through signal lines provided in the marine hose and a transceiver for taking out the information accumulated and stored in the information accumulation device, and
a fatigue degree of each marine hose is estimated by an information acquiring means acquiring the information stored in the information accumulation device through the transceiver based on number of times in which stress exceeding a certain minimum setting value has been generated in the marine hose and on each value of the stresses to estimate the replacing time of the marine hose.

11. A management system for a marine hose used for transporting crude oil or refined oil from a tanker moored in offshore mooring facilities,
**characterized in that**
at least one marine hose disposed at a side of the mooring facility and/or at least one marine hose disposed at a side of the tanker among a plurality of marine hoses coupled between the mooring facilities and the tanker comprise a strain gauge for detecting stress generated in the hose, and
the mooring facility comprises an information accumulation device for accumulating and storing information transmitted from the strain gauge through signal lines provided in the marine hose and a transceiver for taking out the information accumulated and stored in the information accumulation device, and
a fatigue degree of each marine hose is estimated by an information acquiring means acquiring the information stored in the information accumulation device through the transceiver based on number of times in which stress exceeding a certain minimum setting value has been generated in the marine hose and on each value of the stresses to estimate the replacing time of the marine hose.

12. A management system for a marine hose according to any one of claims 8 to 11, wherein the mooring facility comprises a power supply device and supplies power to the strain gauge through a power line provided in the marine hose.

13. A management system for a marine hose according to any one of claims 8 to 11, wherein the marine hose comprises at least four strain gauges.

14. A management system for a marine hose according to any one of claims 8 to 11, wherein the marine hose further comprises a liquid leakage sensor in addition to the strain gauge, whereby a marine hose having experienced external force is detected by information from the strain gauge and a marine hose having experienced liquid leakage is detected by information from the liquid leakage sensor.
